# EUROPEAN PATENT APPLICATION

(11) **EP 1 715 635 A1**
(43) Date of publication of application: **25.10.2006**
(21) Application number: 05710119.8
(22) Date of filing: 10.02.2005
(51) Int. Cl.: H04L 12/56, H04Q 7/22, H04Q 7/38

(54) **SIGNALING MANAGEMENT IN DATA COMMUNICATION NETWORK**

(30) Priority: 13.02.2004 JP 2004037518
(71) Applicant: MATSUSHITA ELECTRIC INDUSTRIAL CO., LTD., Kadoma-shi, Osaka Osaka 571-0051 (JP)
(72) Inventor: UE, Toyoki, 1-3-7 Shiromi, Chuo-ku, Osaka 540-6319 (JP); CHENG, Hong, 1-3-7 Shiromi, Chuo-ku, Osaka 540-6319 (JP); TAN, Pek, Yew, 1-3-7 Shiromi, Chuo-ku, Osaka 540-6319 (JP)
(74) Representative: Grünecker, Kinkeldey, Stockmair & Schwanhäusser Anwaltssozietät
(86) International application number: PCT/JP2005/002067
(87) International publication number: WO 2005/079024

(57) **Abstract**

In a data communication network, data route changes happen frequently due to various reasons. For the path specific resource management signaling, such route changes would trigger large amount of signaling actions. Some of the signaling action requires a complicated process and may take a long time. This may cause service interruption in extreme cases. This invention proposed a method for signaling state management along the old data path to achieve fast signaling state reestablishment. Instead of removing the signaling states along the old data path explicitly or by time-out, the invention preserved the signaling state along the old data path with reduced state management. In the reduced state management, network resources that are held by the states along the old data path are released and minimum information is retained. The states become "dormant" states that do not require active monitoring from the network. When the old path is in use again, the states could be restored and network resources be re-allocated fast. This would be much faster than re-establishing the whole state from scratch. This invention also provides a method for fast recovery from transient route changes by allowing the signaling aware nodes at the crossover point of the data path to monitor the status of old path. This way, the signaling system could quickly re-establish the necessary state along the old path once it's found available again.

## Description

### TECHNICAL FIELD

The present invention pertains to a data communication network. More specifically, the present invention relates to the resource management signaling in a packet based data communication system. Moreover, the present invention deals with the general state management of end-to-end path specific signaling applications.

### BACKGROUND ART

In a data communication network, there are different signaling approaches for the resource management. The signaling messages could flow along the same path as the data traffic or stream separately. As for the resource management signaling, the former approach is usually taken, for example the Resource Reservation Protocol (RSVP) [Non-patent document 1]. When the signaling is going along the data traffic path, any change in the data traffic route would cause some signaling channel re-establishment, e.g. the local repair in the RSVP.

Various events in the data communication network would cause route change in data traffic path, for example, node failure, congestion, load balancing, and mobility movements. Once these happen, nodes involved in the resource management signaling may also vary. Some nodes would no long be on the data traffic path, and therefore need to execute the resource release management and leave the signaling chain. Some new nodes may become part of the data traffic path, and they should be included into the signaling chain and relevant resource management should be triggered. All these management triggering requires some signaling operations. In the event of transient route changes due to mobility movements or transient network failures, the data traffic path may switch from the one route to another route and back to the original route in a very short duration, which is usually referred as Ping-pong effect. Therefore, the resource management procedure and the corresponding signaling would also happen frequently.

When there are new nodes to be included into the signaling chain, some routine process need to be carried out, e.g. signaling node discovery, negotiation, authorization, etc. While a node leaves the signaling chain, conventional signaling methods usually try to remove any state or resources installed on the nodes along the old path immediately after a new path setup, especially in resource management signaling. The aim is to release unused or duplicated resources to the network for better resource utilization. In case of the Ping-pong effect, these conventional approaches would produce some problem. When a mobile node moves back to the old attachment point, it may need to wait for the signaling state to be re-established along the old path before it could request resource for its data flows. As mentioned above, the setup of the signaling state time consuming. Therefore, the mobile node may experience some service interruption. Another problem in the Ping-pong effect is that this kind of signaling state re-establishment would generate quite a heavy signaling load for the network, which is obvious undesirable.
[Non-patent document 1] R. Braden, et. al., "Resource Reservation Protocol", IETF RFC 2205 http://www.ietf.org/rfc/rfc2205.txt
[Non-patent document 2] D. Johnson, et. al., "Mobility Support in IPv6", IETF Internet Draft: draft-ietf-mobileip-ipv6-24.txt http://www.ietf.org/internet-drafts/draft-ietf-mobileipipv6-24.txt
[Non-patent document 3] Hesham Soliman, et. al., "Hierarchical Mobile IPv6 mobility management (HMIPv6)", IETF Internet Draft: draft-ietf-mobileip-hmipv6-08.txt http://www.ietf.org/internet-drafts/draft-ietf-mobileip-hmipv6-08.txt

### DISCLOSURE OF THE INVENTION

The invention proposes a method that solves the signaling problem with the Ping-pong effect by preserving the signaling state along the old path instead of tearing down the whole signaling chain after a route change. Network resources that are formally held by the old states are released but the signaling state on the nodes is retained. The states become "dormant" states that do not require active monitoring from the network. For example in QoS management, the states do not retain the network resources that are previously reserved, but maintained the information of the path such as routing information or peer-to-peer associations. This achieves high efficiency in the reuse of network resources, and facilitates the fast re-establishment of old signaling path at the same time. In the event of route change due to a transient path failure, the invention allows the broken part of the old path be continuously monitored and reused when it's repaired.

A method for achieving fast signaling path re-establishment in a data communication network is disclosed in this description. To help understand the disclosed invention, the following definitions are used:

A "packet" is a self-contained unit of data of any possible format that could be delivered on a data network. A "packet" normally consists of two portions: a "header" portion and a "payload" portion. The "payload" portion contains data that are to be delivered, and the "header" portion contains information to aid the delivery of the packet. A "header" must have a source address and a destination address to respectively identify the sender and recipient of the "packet".

A "mobile terminal" is a network element that changes its point of attachment to the packet-switched data communication network. It is used to refer to an end-user communication terminal that can change its point of attachment to the packet-switched data communication network. In this document, we use the terms "mobile node" and "mobile terminal" interchangeably, unless explicitly stated otherwise.

An "Access Router" is a network element that provides network connection to the "mobile terminal" through any access technologies. These access technologies could be wireless, wired, or even optical. The Access Router is usually signaling aware, which means it would participate in the signaling message processing.

In the following description, for purpose of explanation, specific numbers, times, structures, and other parameters are set forth in order to provide a thorough understanding of the present invention. However, it will be apparent to anyone skilled in the art that the present invention may be practiced without these specific details.

### BRIEF DESCRIPTION OF THE DRAWINGS

Fig. 1 is a diagram showing an example setting of the mobility scenario and the various nodes that are involved in the signaling management;
Fig. 2 is a diagram showing an example procedure to be used in the management of the state along the old data path when a mobility event happens;
Fig. 3 is a flow chart showing an example implementation method for the detection of the validity of the old data path state and a method for managing the addresses;
Fig. 4 is a diagram showing an example procedure to be used in the management of the state along the old data path when a local mobility anchor point is used for concealing the movement of the mobile terminal to external nodes;
Fig. 5 is a diagram showing an example setting of the transient route changes scenario and the various nodes involved in the signaling management; and
Fig. 6 is a diagram showing an example procedure to be used in the management of the state along the data path when a transient route change happens, and a method for fast re-establishment of the old data path states.

### BEST MODE FOR CARRYING OUT THE INVENTION

### (Embodiment 1)

In a packet switched data communication network, especially the Internet, resource management signaling is usually carried out along the data traffic path for establishing services and reserve required resources. One of the examples of such signaling protocol is the RSVP [Non-patent document 1]. Along the signaling path, there may be intermediate nodes besides the source and destination of the signaling message that would be involved in the signaling, e.g. intercepting and processing the signaling message. The nodes are termed as signaling aware. In a proper designed system, these signaling aware nodes usually control the resource for the delivery of the service to the user. Therefore, their participation in the signaling is important for the guarantee of Quality of Service (QoS) to the user.

Changes in network conditions would trigger route changes in the data traffic path, which causes the path specific signaling protocol to establish another signaling path along the new data traffic path. This is a common behavior for the mobile networks.

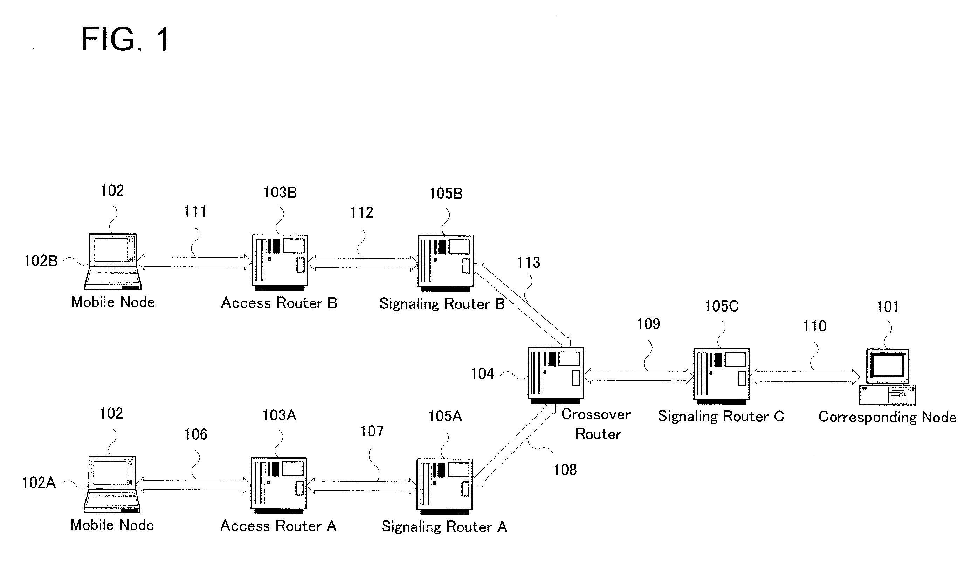

Fig. 1 shows a simplified representation of the mobile communication scenario, where the data communication is between a Mobile Node (MN) (102) and a Corresponding Node (CN) (101). The MN (102) is initially positioned at position 102A and connected to the network via an Access Router (AR) A (103A) through link 106. The link 106 could be of any form depending on the access technology used at the Mobile Node (102), e.g. wireless, infra-red, optical, etc. At this position, the data traffic path is along link 106, 107, 108, 109, and 110, which goes through AR A (103A), Signaling Router (SR) A (105A), Crossover Router (CoR) (104), Signaling Router (SR) C (105C). All the shown network nodes are signaling aware. It is obvious to anyone skilled in the art that there could be more network elements involved in the communication, which are not shown on the diagram. Therefore, the links are logical connection, and could be physically the combination of a number of different links of different communication technologies, e.g. Ethernet (registered trademark) and ATM.

In order to deliver the service along the above mentioned path, some sorts of signaling have to be carried out along the data traffic path, e.g. to allocate corresponding network resources, or configure the network firewall or gateways. The MN (102) can carry out signaling by itself or by using a signaling proxy to carry out signaling on its behalf. If the MN (102) needs a signaling proxy, AR A (103A) could act as a signaling proxy to signal on the MN (102)'s behalf since it's the signaling aware nodes closest to the MN (102).

The CN (101) can be any device that is connected to the network via any kind of technology. In this scenario, it is assumed that the CN (101) is static, although it can also be a node with mobility capability as well. Similarly, the CN (101) can carry out signaling by itself or use a signaling proxy to carry out signaling on its behalf, for example with Signaling Router C (105C) that is the closest signaling aware node to the CN (101).

In order to carry out the signaling along the data traffic path, the signaling aware nodes have to discover each other and establish an association. For example, the AR A (103A) and the SR A (105A) needs to locate each other and setup an signaling relationship, e.g. store each other's address, etc.. After the discover process, each signaling aware node would maintain the state information about its signaling peer. The states will contain for example, the address of the peer, the protocol and port used, and the signaling application available. Only with this state information available, resource management signaling could be carried out. For example, the MN (102) could request the network to allocate corresponding bandwidth for its data flow by sending signal message to the AR A (103A). Using the above mentioned signaling state information, the AR A (103A) could allocate corresponding resources, and forward the message towards the SR A (105A). The allocated resources at AR A (103A) would be associated with the state. The states information may be kept alive or active for a limited duration. For example in QoS Signaling, the states of reservation have to be refreshed at every fixed interval otherwise the corresponding state and associated resources would be released. This could prevent the network failure to exhaust the network's resources.

When the MN (102) moves from one attachment point to another, e.g. from position 102A to position 102B, the network topology could also change. At position 102B, the MN (102) is connected to the network through Access Router B (1038). Therefore, for the same data application with the same CN (101), the data traffic path now comprises link 111, 112, 113, 109, and 110, with two new network nodes, AR B (103B) and SR B (105B) instead of AR A (103A) and SR A (105A).

Since the data path has changed, signaling has to be carried out to have the similar signaling state set up on the new nodes. This includes the signaling aware node discovery and signaling association establishment. It is obvious in the diagram that part of the new data traffic path overlaps with the old data traffic path. The CoR (104) is the first signaling aware node of the common part of the new and old data path. The section of the old data path that consists of AR A (103A), link 107, SR A (105A), and link 108, is no longer in use for the data application between the MN (102) and CN (101). This invention provides a method for managing the state and resources on this section of the data path.

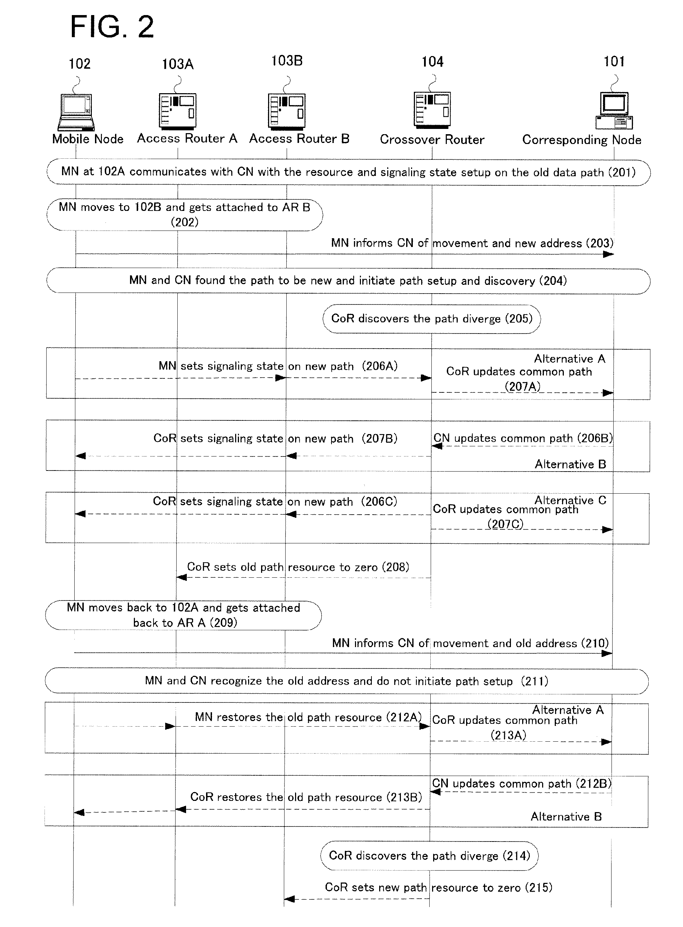

Fig. 2 shows an example signaling process when the MN (102) moves to the position 102B from position 102A and move back to position 102A. The MN (102) starts from position 102A. At this position 102A, it established communication application with the CN (101), and all the signaling aware nodes along the data traffic path, e.g. AR A (103A), and CoR (104), have the signaling state established and corresponding network resources allocated for the communication application (step 201).

Due to certain mobility events, MN (102) changes its position from position 102A to position 102B, and gets attached to the network through AR B (103B) (step 202). Since the AR A (103A) and AR B (103B) owns different address spaces, the MN (102) has to change its local address. In order to continue the communication application with CN (101), the MN (102) needs to inform the CN (101) of the address change through a mobility protocol message (step 203). For example, if Mobile IPv6 [Non-patent document 2] is used, this message sent at step 203 could be the Mobile IP Binding Update message. After receiving this address update message, the CN (101) is able to update its corresponding communication application, e.g. send new data packets to the new address. It is obvious to anyone skilled in the art that this address updating process may involve a few message exchange rounds. It is shown on the diagram with only one message exchange at step 203 for simplicity reasons.

The MN (102) and CN (101) discover that this new address has never been used before, which means the data path is a new one (step 204). The MN (102) could notice this by storing all the previously used address with a timer in its local database.

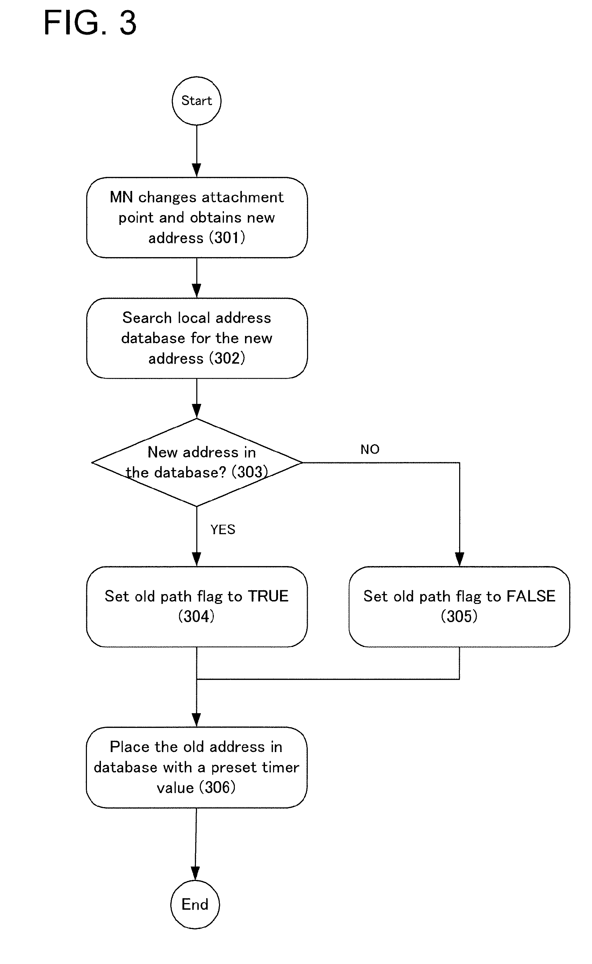

Fig. 3 shows a possible way of implementing this function at the MN (102). When the MN (102) changed its point of attachment, it would obtain a new local address (step 301). The MN (102) would search its local address database, and check if the address has been used before (step 302). The addresses stored in the database are associated with a timer. When this timer expired, the address would be deleted from the database. This address database could be maintained in the memory of the MN (102). If the MN (102) rebooted, the database would be re-initialized with empty records, since MN (102) would reset all its communication application after the reboot and the records were no longer useful.

After the search, the MN (102) checks if the new address is found in the database (step 303). If the address exists with a valid timer, the MN (102) would set the "Old-Path" flag to "TRUE" (step 304). Otherwise, the MN (102) would set the "Old-Path" flag to "FALSE" (step 305). After this, the MN (102) would store the old address into the database with a timer. The value of the timer is preset for the MN (102). Decision of the timer value could depend on several factors, e.g. the network interface type, last detected signaling strength, expected coverage area, the access point load situation, cost of the link, etc. The MN (102) could use a local policy to calculate the value to be used for the timer based on the weighted sum of all the factors.

The CN (101) could implement the function with similar procedure shown in Fig. 3, only with the process 301 replaced by "Receiving the address updating message (sent at step 203)". When the CN (101) stores the address into its database, it should also store the MN (102)'s identifier, e.g. the Home Address of the MN (102) if the Mobile IP is used. The timer value for the address should be indicated by the MN (102) in the address updating message sent at step 203.

As shown in Fig. 2, when the MN and CN discovered that the address is new, they would initiate the signaling path setup procedure (step 204). The signaling path setup procedure includes the discovery of the signaling aware nodes, e.g. the AR B (103B), and SR B (105B). Within this path setup procedure the CoR (104) would be able to discover the divergence of the data path (step 205), since both of the data paths are used for the same communication application, and thus would be associated with the same session identifier allocated for the application.

At this point, there are three possible alternative signaling procedures for the setup of the necessary signaling and resource state along the new data path. Which alternative procedure to be used depends on the signaling protocol used for the resource management and the configuration of the communication applications.

In procedure alternative A, when the MN (102) finds the "Old-Path" flag to be "FALSE", it would initiate the resource reservation message along the new data path (step 206A). This message would setup necessary state information about the application session along the new data path and cause the relevant nodes to allocate corresponding network resources for the data flow. When the reservation message sent at step 206A reaches the CoR (104), the CoR (104) would update its corresponding state information for the session, e.g. update the filter for the data flow since a new address is used at the MN (102). After the update, the CoR (104) would forward an update message to the common part of the data path (step 207A). This message would update the state on the signaling aware nodes along the common data path, similar to the operation at the CoR (104).

In procedure alternative B, the CN (101) would send the common path update message (step 206B). This message would update the signaling state information on the nodes along the common part of the data path, e.g. the data flow filter update, etc. Once the CoR (104) received this message, it would update the corresponding state information for the session, and forward a new data path reservation message towards the MN (102) (step 207B). This reservation message sent at step 207B would setup signaling state on the signaling aware nodes along the new data path, and cause the necessary network resources to be allocated to the session.

In procedure alternative C, the CoR (104), after discovered the path divergence during the path setup procedure at step 205 would send one reservation message towards the MN (102) along the new data path (step 206C). This reservation message sent at step 206C would establish signaling state on the signaling aware nodes along the new data path, and cause necessary network resources to be allocated for the data flow. At the same time, the CoR (104) would send a state update message towards the CN (101) along the common part of the data path (step 207C). This update message sent at step 207C would update all the signaling aware nodes along the common data path of the new address used by the MN (102), e.g. updating the corresponding data flow filter.

The message exchanges at steps 206A, 206B, 206C, 207A, 207B and 207C are shown in the figure going on single direction for the simplicity reasons. It is obvious to anyone skilled in the art that the actual procedure may involve a few rounds of message exchanges along the path in both directions. For example, the MN (102) could send a response message back towards the CoR (104) in procedure alternative B, after received the state reservation message.

The choice of using which procedure alternative depends on the signaling protocol in use the application configurations. For example, if the communication application has the data flowing from CN (101) towards MN (102), the Alternative A would be the procedure in use. If the data flow is flowing from MN (102) towards CN (101) instead, the Alternative B would be the procedure in use. Either Alternative A or Alternative B would not cause any modification on the implementation of the signaling aware nodes, i.e. they share the same state machine implementation. Procedure Alternative C would only be used when the signaling protocol maintains high security association between the signaling peers.

When the MN (102) has the new data path setup, it would indicate to the CoR (104) whether the state of old data path from CoR (104) to MN (102) should be kept. Since along the old data path, there are network resources being allocated for the communication application flows, if the old data path is no longer utilized, those resources should be released. Usually the release of the resource is achieved by timing out the state along the old data path, e.g. the MN (102) does not send refresh message within the time limit. For certain network that's scares in the resources, this type of timing out is not acceptable. Therefore, explicit tearing down of the resource reservation along the old path is necessary. Since in certain case, the MN (102) would require the two data paths to co-exist, e.g. multi-homing mobile node, soft handover, etc, it is desirable for the MN (102) to indicate to the network whether the old path should be torn down immediately.

MN (102) could make the indication by using a flag in the reservation message sent at step 206A in procedure Alternative A, or a flag in the response to the reservation message sent at step 207B or step 206C of the procedure Alternative B and Alternative C. Here tear-down flag is assumed but the flag could be either indication to tear down or keep reservation. When the CoR (104) sees such a tear-down flag present in the message, it would explicitly tear down the resource reservation along the old path for the MN (102). If the CoR (104) does not see such a flag in those messages, or does not receive such messages, it would leave the resource reservation along the old path untouched.

The MN (102) decides on whether to turn on the flag in those messages using its local policy. For example, if the MN (102) had multiple interfaces being used for the same session, i.e. multi-homing cases, it would desire that the network keep the reservations on both of the data paths. In this case, MN (102) would not turn on the flag. While, if the MN (102) were the source of the data flow, and it decided to switch to the new data path, it would turn the flag on and ask the network to tear down the old data path reservation. Lower layer information would also help the MN (102) in deciding the flag value. For example, if a layer 2 trigger shown that the link for the old path had already lost, the MN (102) would request the network to tear down the old path reservation by turning on the flag. There are more factors to be considered by the MN (102) when deciding the flag, e.g. the cost of using the old link, the bandwidth available, the delay of the paths, the reliability of the link, etc.

As shown in Fig. 2, when the CoR (104) sees the flag indicated by the MN (102), it would try to release the resources allocated along the old data path for the MN (104) by sending a set-to-zero message along the old path. This set-to-zero message would cause any signaling aware node along the old data path from the CoR (104) to MN (102) to release any network resources allocated for the data flow. Signaling aware nodes could release network resources gradually, for example, step by step so that current resource reservation could be recovered with higher possibility when MN (102) moves back. The parameters of timer and step for the gradual release control would be included in the set-to-zero message.

At the same time, these signaling aware nodes would keep the signaling association and any other state information about the flow. Such signaling or state information would be set with a new timer value, which is included in the set-to-zero message. Before the timer expires, the states would appear to be in dormant mode to the management entities of these nodes, although with no network resources being allocated for them. The released network resources could now be used by other sessions. When the timer associated with the states expires, those states would be also removed from these signaling aware nodes. The timer value could be set to be the same as the value used at MN for its local address. This way, the removing of the address and state along the old path could be synchronized.

Since all the state information has been kept, these nodes are still aware of the application session. For the MN (102) to re-use the old path, it only needs to change the network resource reservation back to its desired value. This type of restore process is generally much faster than establishing a whole new state. For example, the resource allocation could be just a value change in the Management Information Base, and the reactivation of the state is just a change of flag value. Signaling aware nodes could increase network resources gradually, for example, step by step according to the traffic conditions if the requested resources are not available. Because these states are put into the dormant mode, there is no need to include them in the normal maintenance of the node, e.g. monitoring of the peer information, etc. Also, the associated flow filter would be in the processing of the received packets. These reduce the cost of maintaining the state information to the lowest.

As shown in Fig. 2, the MN (102) may move back to position 102A within a short time, and get attached to the same AR A (103A) (step 209). Similarly, the MN (102) would obtain a local address from the AR A (103A), and inform the CN (101) of this address change through a notification message (step 210). This time, using the method depicted in Fig. 3, the MN and CN recognized the address (step 211), and they would not initiate the signaling path setup procedure.

At this point, there are also two alternative procedures for the signaling, which are corresponding to the Alternative A and Alternative B mentioned before. The use of the alternative procedures also depends on the previous procedures chosen. If the Alternative C were chosen for the previous procedures, here both Alternative A and Alternative B could be used depending on the communication direction.

In procedure alternative A, the MN (102) sends an old path restore message towards the CN (101) along the old data path through AR A (103A) (step 212A). This message includes the desired network resources information for the data flow, and the current address information for the MN (102). When received this restore message sent at the 212A, the signaling aware nodes along the old path, e.g. the AR A (103A), would put activate the original state information, and allocating corresponding network resources to be associated with the session. As mentioned earlier, signaling aware nodes could increase network resources gradually, for example, step by step according to the traffic conditions if the requested resources are not available. Since the MN (102) and the signaling aware nodes use the same timer value for the address and the state, it is guaranteed that the states information is available on these nodes. Since the most of the state information are still valid, the restore message only needs to include minimum information, and it could be quite small. Besides that, since the restoring process would not need to re-establish the whole state, it would also be much faster than setting up a new session.

After received this restore message sent at step 212A at the CoR (104), it would update its state, e.g. the flow filter, using the new address of the MN (102). The CoR (104) would forward towards the CN (101) a common path update message (step 213A). This message sent at step 213A would cause all the signaling aware nodes along the common data path to update their state with the current address of the MN (102) and desired network resource allocation.

In alternative procedure B, the CN (101) sends a common data path update message (step 212B), after discovered that the MN (102) returned to the old path. This update message includes the current address used by the MN (102), and the desired network resources. Signaling aware nodes along the common data path would update their states according to the information, e.g. adjust the data flow filter with the new address of the MN (102).

When the CoR (104) received this common path update message sent at step 212B, it would forward an old path restore message to the MN (102) through AR A (103A) (step 213B). This restore message includes the similar information as the common path update message sent at step 212B. Any signaling aware nodes along the old path would activate the corresponding state for the session when received this message sent at step 213B. Corresponding network resources indicated in the message would also be allocated and associated to the session. As mentioned earlier, signaling aware nodes could increase network resources gradually, for example, step by step according to the traffic conditions if the requested resources are not available.

As mentioned earlier, the choice of the alternative procedure to be used depends on the signaling protocol in use, the configuration of the communication application, and the alternative procedure used beforehand.

In either Alternative A, or Alternative B, after the movement, the messages sent at steps 212A and 212B both include the desire network resources information. This is because after change of the attachment point, the communication requirement may also change. For example, when a MN performs handover from Wireless LAN interface to its UMTS interface, the bandwidth requested would be much lesser. Therefore, different network resource may be allocated for different MN (102) attachments.

After receiving the message sent at step 212A or step 212B, the CoR (104) would be able to detect the change of data path at the MN (102) (step 214). Similarly, if the MN (102) also indicated that the resources on the previous data path (111, 112 and 113) should be released, the CoR (104) would send a set-to-zero message along the previous data path (step 215). This message would achieve the similar effects as the message sent at step 208.

The whole signaling process could continue until the CN (101) or the MN (102) terminate the communication application session.

### (Embodiment 2)

The procedure mentioned in Embodiment 1 assumes that the mobility of the MN (102) is visible by the CN (101). When certain local mobility scheme is used, the movement of the MN (102) would be transparent to the CN (101), e.g. when Hierarchical Mobile IP scheme [Non-patent document 3] is used the same address would be seen at the CN (101) as long as MN (102) is inside one domain of the MAP (Mobility Anchor Point). In this case, the mobile anchor point would usually act as the CoR (104). Therefore, any movement of the MN (102) would be known by the CoR (104).

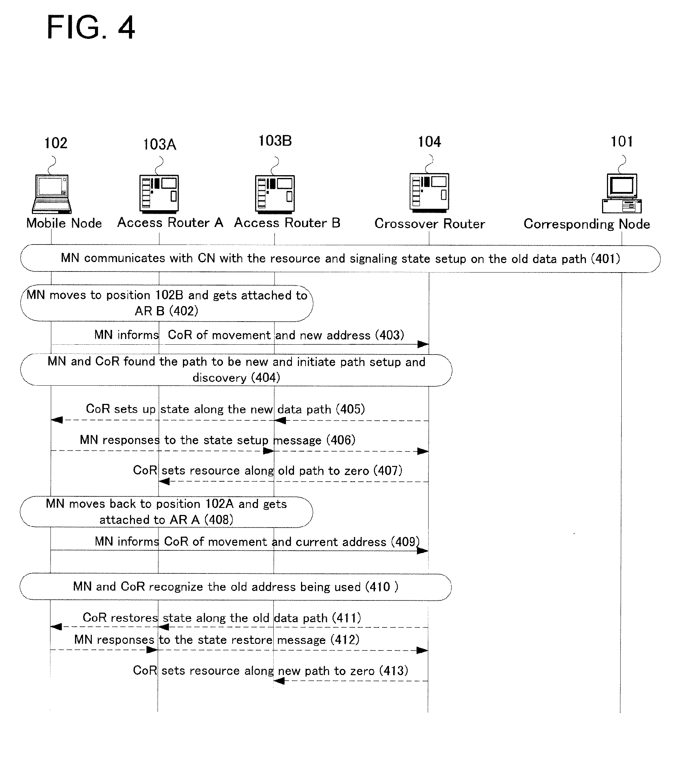

Fig. 4 shows the possible operation procedure of the invention when such local mobility scheme is in place. The MN (102) starts the communication application with the CN (101) at position 102A. The MN (102) connects to the network through AR A (103A), and the CoR (104) is a local mobility anchor point. Therefore, all the data traffic would goes through the CoR (104) as long as MN (102) remains in its domain. At position 102A, the MN (102) has the network resources reserved along the data path (step 401). The CoR (104) would store the local address of the MN (102).

Due to certain mobility events, the MN (102) moves to the new location 102B, and attached to the network through the AR B (103B) (step 402). At the same time, the MN (102) would obtain a new local address from the AR B (103B) since it owns different address space from that of the AR A (103A). To maintain the communication, the MN (102) uses the mobility protocol to inform the movement and its new address to the mobility anchor point, CoR (104).

After reception of the address update message sent at step 403, the CoR (104) would check if the address had been used by the MN (102) before. Method shown in Fig. 3, as described in Embodiment 1 for the MN (102) recognizing the address, could be used at the CoR (104), with the first step 301 being receiving the address update message sent at step 403 from MN (102). In this case, the CoR (104) would also maintain a database of the previous local addresses used by the MN (102) with a timer associated with each of the address.

If no record of the address were found, the CoR (104) and MN (102) would initiate the path discovery and signaling state setup process (step 404). This path setup process includes establishing messaging associations between signaling aware nodes along the new data path, setting up the signaling message routing table, etc.

The CoR (104) would send a reservation and state setup message along the new data path towards the MN (102) (step 405). This message would cause the signaling aware nodes along the new data path to create state information about the application session, and allocating necessary network resources for the data flow.

Since the CoR (104) is the local mobility anchor point, the movement of the MN (102) from position 102A to position 102B would be concealed from the outside network nodes, e.g. the CN (101). Therefore, the signaling state and application session information does not need to be updated along the common part of the data path. From the CN (101) point of view, the MN (102) remains at the same contact point. In view of this, the CoR (104) does not need to send any message along the common part of the data path.

It is obvious to anyone skilled in the art that the state setup message sent at step 405 could be combined with the path setup message sent at step 404 in certain case, e.g. the data traffic flows from CoR (104) towards the MN (102). These two messages could be sent within one message packet.

After MN (102) received the state setup message sent at step 405, it would reply with a response message to indicate the result of the state setup (step 406). In the same message, the MN (102) would indicate its desire of the treatment for the old data path, e.g. to tear down immediately, or to keep it. This response would be relayed by the signaling aware nodes along the new data path towards the CoR (104). At this time, the communication application would be flowing through the CoR (104) towards the new data path.

If the MN (102) indicated that the resources along the old path should be released, the CoR (104) would send a set-to-zero message along the old data path (step 407). This set-to-zero message sent at step 407 would cause the signaling aware nodes along the old data path to free corresponding network resources for the communication session, but preserve the signaling association and state information. Corresponding state would be put into a dormant mode with timer set. This is similar to the behavior described in the Embodiment 1.

Within a short time period, the MN (102) moves back to the position 102A, and attached to AR A (103A) (step 408). The MN (102) would be allocated with a new local address, and MN (102) reports this to the CoR (104) through an update message (step 409).

After reception of this address update message sent at step 409, the CoR (104) would search its local database to verify if the address is a previously used address by the MN (102). If the address has a valid record in the data base, the CoR (104) would send a restore state message along the old path (step 411). This restore message sent at step 411 would cause the signaling aware nodes that have the valid dormant state to reactivate the state and allocate any necessary resource for the application session. Since the state information is already available, this restore process would be much faster than a normal state establishment process.

When the MN (102) sees the restore state message sent at step 411, it would reply with a state restore response message (step 412) to report the result of the restore and indicate it is preferred treatment of the previous path. This response message sent at step 412 would be relayed by the signaling aware nodes along the path towards the CoR (104). When the CoR (104) sees the message with the flag to tear down the previous path (111, 112 and 113), it would send a set-to-zero message with a timer value towards the previous data path (step 413). This message causes the state on the signaling aware node for the application to be set to dormant and corresponding network resources released, similar to the effects of the message sent at step 407.

It is obvious to anyone skilled in the art that as long as MN (102) moves inside the CoR (104)'s domain, the CN (101) would not notice the movement. Therefore, all these signaling would happen only inside changed section. The common data path needs no modification or update.

If the MN (102) moves out of the CoR (104) domain, which means the local mobility scheme is invalid, the procedure described in Embodiment 1 would apply. In this case, the CN (101) would be aware of the movement of the MN (102).

In the example shown in the above two embodiment, the mobile node is communicating with a fixed node. Actually, the invention could also apply to the case where two sides of the communication ends are both mobile nodes. In that case, there would be two crossover routers present, and the invention would apply on all old data traffic paths.

### (Embodiment 3)

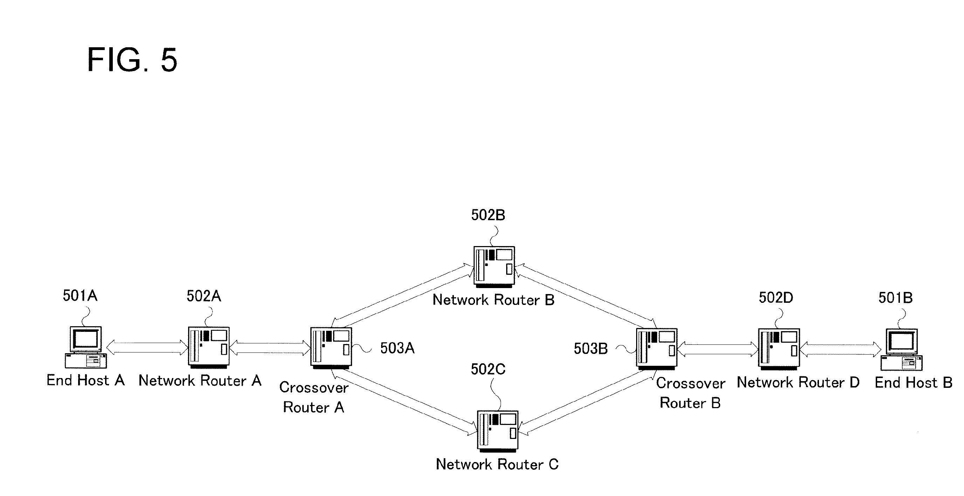

In the previous two embodiments, the changes of data path are caused by movement of the mobile terminals. In a data communication network, the route change could sometimes be triggered by transient network failure or load balancing reasons. In that case, no mobility protocol would be involved in the signaling. Fig. 5 shows an example scenario where the route changes happen for the communication between two fixed end hosts.

The fixed End Host A (EH A) (501A) starts communication with fixed End Host B (EH B) (501B), through the route of Network Router A (NR A) (502A), Crossover Router A (CoR A) (503A), NR B (502B), CoR B (503B), and NR D (502D). It is obvious to anyone skilled in the art that there could be more network nodes along the data path of the communication. The diagram shows only part of the nodes for simplicity reasons. All these network nodes shown on the diagram are signaling aware, which means they would participate in the signaling message processing.

At certain time, the route between the CoR A (503A) and CoR B (503B) may fail, and therefore the NR B would no long be able to serve the data path. Different reasons could contribute to the failure, e.g. a link breakdown, NR B exhausted its resources, and load balancing reasons, etc. In this case, the network routing protocol would divert the data traffic to another route, e.g. from CoR A (503A) to NR C (502C), and from NR C (502C) to CoR B (503B).

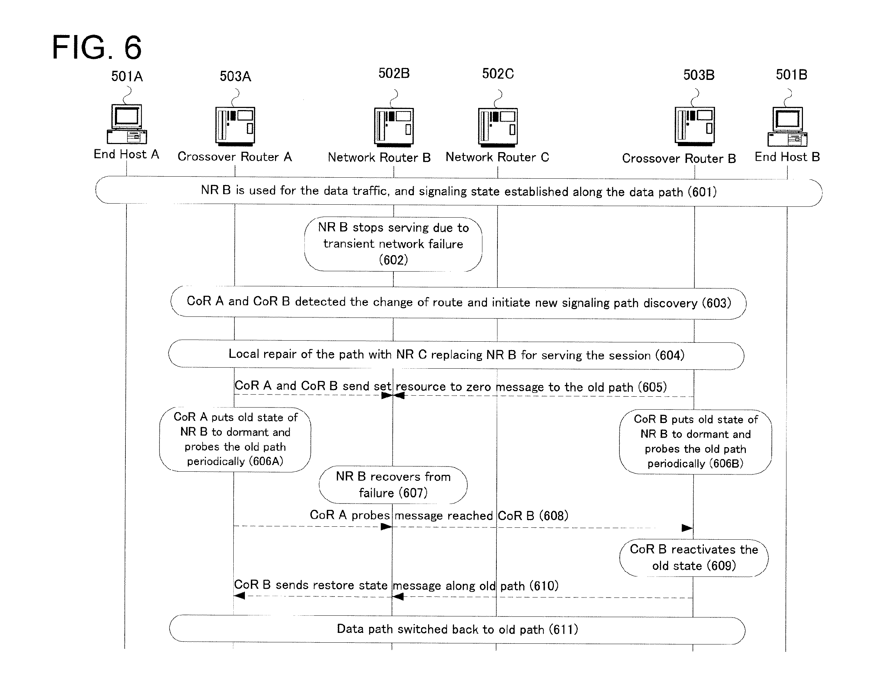

This kind of route change would also cause some signaling actions, e.g. QoS reservation along the new route for the application session. CoR A (503A) and CoR B (503B) would notice the change of route by monitoring the outgoing or incoming interface for the communication data flow. This requires some information at the routing protocol to be available. The transition to the new data route could be just a temporary measure, e.g. the route is just a backup route. Once the old route is available, the data traffic should be diverted back to the original path, e.g. for the delay, or cost reasons. Fig. 6 shows an example signaling procedure that utilizes this invention for the transient failure situation to achieve fast data path restore.

The EH A (501A) starts the communication with EH B (501B) through the old path that goes through NR B (502B). The signaling state and necessary network resources are already allocated for the data flow along the data path for certain QoS guarantee (step 601). At certain point of time, the route through the NR B is no longer able to serve the communication application (step 602). As mentioned above, this could be cause by a combination of different reasons, e.g. link failure between CoR A (503A) and NR B (502B). The routing protocol used in the network would automatically divert the data traffic to another route, e.g. via NR C (502C).

The CoR A (503A) and CoR B (503B) would detect the change of the route as mentioned above. In response, the CoR A (503A) and CoR B (503B) would initiate the new signaling path discovery (step 603). After the successful path discovery, the signaling state and resource reservation would be established along the new data path (step 604). The detail operation for these two processes depends on the direction of the communication data flow, and the protocol in use.

At this point, the communication data would be flowing along the new data route and necessary resources have been allocated for providing the QoS guarantee. Since the old data route is no longer in use, the CoR A (503A) and CoR B (503B) would send a set-to-zero message for the resources along the old data path (step 605). This set-to-zero message would cause any signaling aware nodes along the old data route to release the allocated network resources for the data flow, and put the relevant state into dormant mode with a timer. The value for the timer would be indicated in the set-to-zero message sent at step 605. When the timer expires, the dormant state would be deleted.

For the two Crossover Routers, CoR A (503A) and CoR B (503B), they would similarly put the state of the old data route to dormant mode, and at the same time, they would initiate a probing process (step 606A and step 6068). This probing process would periodically try to send a probe message along the old data route for a preset period of time. If the probe message could not get through within the period, the old state information about the old data route would be deleted. Length of the preset period is decided by the CoR based on the characteristics of the network, e.g. for the backbone, the period would be longer.

If within the period, the old route recovered from the failure (step 607), the probe message would get through. For example, the probe message sent by CoR A (503A) would be relayed by the NR B (502B) to the CoR B (503B) (step 608). This means the old data route is now available for the service.

After received this probe message, the CoR B (503B) would reactivate old state for the old data route (step 609), and send a restore state message along the old path towards the CoR A (503A) along the old path (step 610). This restore message sent at step 610 contains the necessary state information for restoring resource reservation, and other state for serving the data flow along the old path. Signaling aware nodes along the old route, e.g. NR B (502B), would use the contained information to restore the state, and prepare for serving the data flow. After received the state restore message sent at step 610, the CoR A would inform the corresponding routing management entity to re-divert the data flow to the old data path, i.e. via NR B (502B). Since the state and resource reservation have already been established before the re-diversion, the data flow could enjoy the QoS guarantee without further processing.

### INDUSTRIAL APPLICABILITY

The present invention can be applied to the technology concerning a data communication network. More specifically, the present invention can be applied to the technology concerning the resource management signaling in a packet based data communication system. Moreover, the present invention can be applied to the technology concerning the general state management of end-to-end path specific signaling applications.

## Claims

1. A system for managing signaling in a data communication network for achieving fast signaling route re-establishment comprising:
i. a mobile capable communication terminal that can change its point of attachment and communication address during a communication session, and is able to recognize previously used attachment point and address;
ii. a correspondent terminal that maintains communication session with the said mobile capable communication terminal, and is able to recognize previously used address by the said mobile capable communication terminal; and
iii. a single or plural network elements along the data path of the said communication session that are capable of freezing the signaling state for the said communication session with relevant network resources released and reactivating the said signaling state with relevant network resources re-allocated upon reception of predefined signaling messages.

2. The system for managing signaling in a data communication network for achieving fast signaling route re-establishment according to claim 1 further comprising a network element along the data path of the said communication session that is capable of detecting the change in the data path and initiate the message for releasing the network resources on the previous data path and updating the state information on the overlapped data path.

3. The system for managing signaling in a data communication network for achieving fast signaling route re-establishment according to claim 1, wherein the said mobile capable communication terminal further comprising:
i. means for indicating preferred treatment of signaling state over previous data path by including a flag in the messages for setting up signaling state over the new data path; and
ii. means for calculating the time period for keeping a previously used communication address information by using information of the previous network connection status and characteristics.

4. The system for managing signaling in a data communication network for achieving fast signaling route re-establishment according to claim 1, wherein the said correspondent terminal communicating with the said mobile capable communication terminal is capable of changing point of attachment and communication address during the said communication session.

5. The system for the said mobile capable communication terminal according to claim 1 to recognize its previously used point of attachment and communication address comprising:
i. a local database for storing the attachment point and communication address information; and
ii. a timer associated with the attachment point and communication address information;
whereby the stored information would be removed when the timer expires.

6. The system for the said correspondent terminal communicating with the said mobile capable communication terminal according to claim 1 to recognize the previously used communication address of the mobile capable communication terminal comprising:
i. a local database for storing the said mobile capable communication terminal identity and communication address information; and
ii. a timer associated with the identity and communication address information;
whereby the stored information would be removed when the timer expires.

7. A system for managing signaling in a data communication network for achieving fast signaling route re-establishment comprising:
i. a mobile capable communication terminal that can change its point of attachment and communication address during a communication session, and is able to recognize previously used attachment point and address;
ii. a single or plural network elements along the data path of the said communication session that is capable of freezing the signaling state for the said communication session with relevant network resources released and reactivating the said signaling state with relevant network resources re-allocated upon reception of predefined signaling messages; and
iii. a local mobility anchor point along the data path of the said communication session that is capable of detecting and concealing the change of the communication address of the said mobile capable communication terminal and recognizing previously used communication address by the said terminal, and able to initiate the message for release the network resources on the previous data path.

8. The system for the said local mobility anchor point according to claim 7 to recognize the previously used communication address of the mobile capable communication terminal comprising:
i. a local database for storing the said mobile capable communication terminal identity and communication address information; and
ii. a timer associated with the identity point and communication address
whereby the stored information would be removed when the timer expires.

9. A system for managing signaling in a data communication network for achieving fast recovery from transient route changes comprising:
i. a single or plural pair of communication terminals that maintains communication sessions during the transient route change;
ii. a single or plural crossover nodes that are capable of detecting the route changes, initiating messages for releasing network resources over the old route, monitoring the availability of the old route, and informing route management entity when the old route becomes available; and
iii. a single or plural network elements along the data path of the said communication session that are capable of freezing the signaling state for the said communication session with relevant network resources released and reactivating the said signaling state with relevant network resources re-allocated upon reception of predefined signaling messages.

10. A method for the resource management signaling in a data communication network to support multiple connections for a communication session and achieve better efficiency in resources utilization comprising the steps of:
i. obtaining a new network connection for an existing communication session by a communication terminal; and
ii. indicating to the network its preferred treatment of previous connection by including a flag in the messages used for the setup of the signaling state over the new connection by the said communication terminal.

11. The method for the said communication terminal to decide the value of the flag according to claim 10 by using information comprising:
i. local management policy;
ii. communication application configurations;
iii. status of the interface for the previous connection;
iv. cost of using the connections;
v. available bandwidth of the connection
vi. reliability of the connections; and
vii. a weighted sum of the above factors.

12. A method for the resource management signaling in a data communication network to achieve fast signaling state re-establishment comprising the steps of:
i. detecting the change of data route, and sending messages for releasing network resources along the previous data path for the communication session by a crossover node along the communication data path of a mobile terminal;
ii. setting the signaling state for the communication session to dormant mode and releasing corresponding network resources by the network elements capable of processing the said release message along the previous data path;
iii. detecting the return to the old data path, and send messages for restoring the signaling state and resources along the old data path by the said mobile terminal; and
iv. reactivating the signaling state and reallocating corresponding network resources by the said network elements capable of processing the said restore message.

13. A method for the resource management signaling in a data communication network to achieve fast signaling state re-establishment comprising the steps of:
i. detecting the change of data route, and sending messages for releasing network resources along the previous data path for the communication session by a crossover node along the communication data path of a mobile terminal;
ii. setting the signaling state for the communication session to dormant mode and releasing corresponding network resources by the network elements capable of processing the said release message along the previous data path;
iii. detecting the said mobile terminal's return to the old data path and sending messages for restoring the signaling state and network resources to the old data path by the said crossover node; and
iv. reactivating the signaling state and reallocating corresponding network resources by the said network elements capable of processing the said restore message.

14. The method for the resource management signaling in a data communication network according to claim 12 or 13 further comprising the steps of:
i. including a timer value with the said resource release message sent to old data path by the said crossover router; and
ii. deleting the signaling state in the dormant mode when the timer expires by the said network elements along the old data path.

15. The method for the resource management signaling in a data communication network according to claim 14 further comprising the step of informing the preferred timer value through a message for setting up signaling state for the new data path by the said mobile terminal.

16. The method for the mobile terminal to detect the return to the old data path according to claim 12 comprising the steps of:
i. storing previously used address and attachment point information in a local database with a timer associated by the mobile terminal;
ii. searching the data base when attached to a new attachment point and been allocated a new address by the mobile terminal; and
iii. removing the address and attachment point information from the database when the associated timer expired by the mobile terminal.

17. The method for the crossover node to detect the mobile terminal's return to the old data path according to claim 13 comprising the steps of:
i. storing the mobile terminal's previously used path information in a local database with a timer associated when a data route change is detected by the crossover node;
ii. searching the data base when detected an data route change by the crossover node; and
iii. removing the path information from the database when the associated timer expires by the crossover node.

18. The method for the mobile terminal to decide the timer value according to claim 14 by using information comprising:
i. the network interface type;
ii. last detected signaling strength;
iii. attachment point coverage area;
iv. the access point load situation;
v. cost of the link; and
vi. weighted sum of the above factors

19. The method for the mobile terminal to decide the timer value according to claim 16 by using information comprising:
i. the network interface type;
ii. last detected signaling strength;
iii. attachment point coverage area;
iv. the access point load situation;
v. cost of the link; and
vi. weighted sum of the above factors

20. A method for the resource management signaling in a data communication network to achieve fast signaling state re-establishment when a local mobile anchor point is used to conceal the movement of the mobile terminal to external nodes comprising the steps of:
i. informing the mobility anchor point of change of location, and the mobility anchor point sending messages for releasing network resources along the previous data path for the communication session by the mobile terminal;
ii. setting the signaling state for the communication session to dormant mode and releasing corresponding network resources by the network elements capable of processing the said release message along the previous data path;
iii. detecting the said mobile terminal's return to the location and sending messages for restoring the signaling state and network resources to the old data path by the said mobility anchor point; and
iv. reactivating the signaling state and reallocating corresponding network resources by the said network elements capable of processing the said restore message.

21. A method for the resource management signaling in a data communication network to achieve fast recovery from transient route changes comprising the steps of:
i. detecting the change of data route and send message for releasing the network resources along the old data path by the crossover nodes along the data path;
ii. starting a timer and monitoring the status of the old path and sending message for restoring the signaling state and network resources when detected the old path is available by the said crossover nodes; and
iii. informing the routing management entity of the availability of the old data path by the said crossover nodes.

22. The method for the said crossover node to monitor the availability of the old path according to claim 21 comprising the steps of:
i. periodically sending probe messages along the old data path by the crossover nodes; and
ii. dictating the availability of the old path when received the probe message along the old data path by the crossover nodes.

## Amended claims

### Amended claims under Art. 19.1 PCT

**1.** Claims 1-12 remain unchanged.

**2.** Claims 13-22 as originally filed have been replaced by amended claims 13-25. terminal; and
iv. reactivating the signaling state and reallocating corresponding network resources by the said network elements capable of processing the said restore message.

**13.** (Amended) The method for the resource management signaling in a data communication network according to claim 12 further comprising the steps of:
i. including a timer value with the said resource release message sent to old data path by the said crossover router; and
ii. deleting the signaling state in the dormant mode when the timer expires by the said network elements along the old data path.

**14.** (Amended) The method for the resource management signaling in a data communication network according to claim 13 further comprising the step of informing the preferred timer value through a message for setting up signaling state for the new data path by the said mobile terminal.

**15.** (Amended) The method for the mobile terminal to decide the timer value according to claim 13 by using information comprising:
i. the network interface type;
ii. last detected signaling strength;
iii. attachment point coverage area;
iv. the access point load situation;
v. cost of the link; and
vi. weighted sum of the above factors

**16.** (Amended) A method for the resource management signaling in a data communication network to achieve fast signaling state re-establishment comprising the steps of:
i. detecting the change of data route, and sending messages for releasing network resources along the previous data path for the communication session by a crossover node along the communication data path of a mobile terminal;
ii. setting the signaling state for the communication session to dormant mode and releasing corresponding network resources by the network elements capable of processing the said release message along the previous data path;
iii. detecting the said mobile terminal's return to the old data path and sending messages for restoring the signaling state and network resources to the old data path by the said crossover node; and
iv. reactivating the signaling state and reallocating corresponding network resources by the said network elements capable of processing the said restore message.

**17.** (Amended) The method for the resource management signaling in a data communication network according to claim 16 further comprising the steps of:
i. including a timer value with the said resource release message sent to old data path by the said crossover router; and
ii. deleting the signaling state in the dormant mode when the timer expires by the said network elements along the old data path.

**18.** (Amended) The method for the resource management signaling in a data communication network according to claim 17 further comprising the step of informing the preferred timer value through a message for setting up signaling state for the new data path by the said mobile terminal.

**19.** (Amended) The method for the mobile terminal to detect the return to the old data path according to claim 12 comprising the steps of:
i. storing previously used address and attachment point information in a local database with a timer associated by the mobile terminal;
ii. searching the data base when attached to a new attachment point and been allocated a new address by the mobile terminal; and
iii. removing the address and attachment point information from the database when the associated timer expired by the mobile terminal.

**20.** (Amended) The method for the crossover node to detect the mobile terminal's return to the old data path according to claim 16 comprising the steps of:
i. storing the mobile terminal's previously used path information in a local database with a timer associated when a data route change is detected by the crossover node;
ii. searching the data base when detected an data route change by the crossover node; and
iii. removing the path information from the database when the associated timer expires by the crossover node.

**21.** (Amended) The method for the mobile terminal to decide the timer value according to claim 17 by using information comprising:
i. the network interface type;
ii. last detected signaling strength;
iii. attachment point coverage area;
iv. the access point load situation;
v. cost of the link; and
vi. weighted sum of the above factors

**22.** (Amended) The method for the mobile terminal to decide the timer value according to claim 19 by using information comprising:
i. the network interface type;
ii. last detected signaling strength;
iii. attachment point coverage area;
iv. the access point load situation;
v. cost of the link; and
vi. weighted sum of the above factors

**23.** (Amended) A method for the resource management signaling in a data communication network to achieve fast signaling state re-establishment when a local mobile anchor point is used to conceal the movement of the mobile terminal to external nodes comprising the steps of:
i. informing the mobility anchor point of change of location, and the mobility anchor point sending messages for releasing network resources along the previous data path for the communication session by the mobile terminal;
ii. setting the signaling state for the communication session to dormant mode and releasing corresponding network resources by the network elements capable of processing the said release message along the previous data path;
iii. detecting the said mobile terminal's return to the location and sending messages for restoring the signaling state and network resources to the old data path by the said mobility anchor point; and
iv. reactivating the signaling state and reallocating corresponding network resources by the said network elements capable of processing the said restore message.

**24.** (Amended) A method for the resource management signaling in a data communication network to achieve fast recovery from transient route changes comprising the steps of:
i. detecting the change of data route and send message for releasing the network resources along the old data path by the crossover nodes along the data path;
ii. starting a timer and monitoring the status of the old path and sending message for restoring the signaling state and network resources when detected the old path is available by the said crossover nodes; and
iii. informing the routing management entity of the availability of the old data path by the said crossover nodes.

**25.** (Amended) The method for the said crossover node to monitor the availability of the old path according to claim 24 comprising the steps of:
i. periodically sending probe messages along the old data path by the crossover nodes; and
ii. dictating the availability of the old path when received the probe message along the old data path by the crossover nodes.
